# EUROPEAN PATENT APPLICATION

(11) **EP 2 770 509 A1**
(43) Date of publication of application: **27.08.2014**
(21) Application number: 12840997.6
(22) Date of filing: 03.10.2012
(51) Int. Cl.: G21C 13/024, E02D 27/32, E02D 27/34, E04H 5/02, E04H 9/02

(54) **FOUNDATION STRUCTURE FOR REACTOR CONTAINMENT VESSEL**

(30) Priority: 20.10.2011 JP 2011231118
(71) Applicant: Mitsubishi Heavy Industries, Ltd., Tokyo 108-8215 (JP)
(72) Inventor: SHIMIZU, Hiroshi, Tokyo 108-8215 (JP); OKAMOTO, Hiromu, Tokyo 108-8215 (JP); SATO, Kunihiko, Tokyo 108-8215 (JP)
(74) Representative: Intès, Didier Gérard André
(86) International application number: PCT/JP2012/075676
(87) International publication number: WO 2013/058113

(57) **Abstract**

In the foundation structure of a reactor containment vessel, a lower foundation plate (33) provided on a ground (31), an upper foundation plate (34) provided over the lower foundation plate (33), a base isolation device (35) inserted between the upper foundation plate (34) and the lower foundation plate (33), and a reactor containment vessel (11) provided on the upper foundation plate (34) are provided. The ends of reverse U-shaped tendons (48) serving as the lower structures of the reactor containment vessel (11) are fixed to the lower surface of the upper foundation plate (34) through the upper foundation plate (34), which makes it possible to simplify a structure and reduce a construction cost.

## Description

### Field

The present invention relates to the foundation structure of a reactor containment vessel to vertically arrange the reactor containment vessel on a foundation plate on the ground.

### Background

As one of nuclear power plants, a pressurized water reactor has been known. The pressurized water reactor uses light water as a reactor coolant and a neutron moderator to produce high-temperature and high-pressure water that does not come to a boil over an entire primary system, supplies the high-temperature and high-pressure water to a steam generator to generate steam through heat exchange, and supplies the steam to a turbine generator to generate electricity.

In a nuclear power plant having such a pressurized water reactor, a reactor containment vessel is vertically arranged on a foundation plate laid on the ground, and the foundation plate has a base isolation structure. As a foundation plate having such a base isolation structure, there has been known one described in, for example, Patent Literature 1. In the foundation plate of the building of a nuclear plant described in Patent Literature 1, a base isolation device is provided between a lower foundation plate provided on the ground and an upper foundation plate on which a reactor containment vessel is vertically arranged.

### Citation List

### Patent Literature

Patent Literature 1: Japanese Laid-open Patent Publication No. 2011-163927

### Summary

### Technical Problem

In the conventional nuclear power plant described above, the reactor containment vessel is composed of a thick quake resisting wall, and the quake resisting wall is fixed to the foundation plate by steel rods such as a number of anchor bolts and steel wires. Since the base isolation device is provided between the upper foundation plate and the lower foundation plate in the foundation plate of the building of the conventional nuclear power plant described above, the quake resisting wall is fixed to the upper foundation plate. Therefore, since space has to be provided to fix anchor bolts or the like and an operator is required to perform a fixing operation inside the foundation plate depending on a structural form, the upper foundation plate has a thick structure. The thickening of the upper foundation plate as described above gives rise to the problems that the structure becomes complicated and a construction cost increases due to an increase in construction period and material amount.

The present invention is directed to solve the above problems and has an object of providing the foundation structure of a reactor containment vessel that makes it possible to simplify a structure and reduces a construction cost.

### Solution to Problem

According to an aspect of the present invention in order to achieve the object, there is provided a foundation structure of a reactor containment vessel, including: a lower foundation plate provided on a ground; an upper foundation plate provided over the lower foundation plate; a base isolation device inserted between the upper foundation plate and the lower foundation plate; and a reactor containment vessel provided on the upper foundation plate, wherein lower structures of the reactor containment vessel are fixed to a lower surface of the upper foundation plate through the upper foundation plate.

Accordingly, since the base isolation device is inserted between the upper foundation plate and the lower foundation plate and the lower structures of the reactor containment vessel are fixed to the lower surface of the upper foundation plate through the upper foundation plate, space is not required inside the upper foundation plate to fix the lower structures of the reactor containment vessel and the thinning of the upper foundation plate and the simplification of a structure are allowed. In addition, with a reduction in construction period and material amount, it is possible to reduce a construction cost.

According to an another aspect of the present invention, there is provided the foundation structure of the reactor containment vessel, wherein the base isolation device is configured in such a way that a plurality of base isolation members is horizontally arranged with a prescribed interval between the upper foundation plate and the lower foundation plate, and the lower structures of the reactor containment vessel are extended through the upper foundation plate to space between the respective base isolation members to be fixed.

Accordingly, since the plurality of base isolation members is horizontally arranged with a prescribed interval between the upper foundation plate and the lower foundation plate and the lower structures of the reactor containment vessel are extended to the space between the respective base isolation devices to be fixed, operation space is not required inside the upper foundation plate to fix the lower structures of the reactor containment vessel and the thinning of the upper foundation plate is allowed.

According to still another aspect of the present invention, there is provided the foundation structure of the reactor containment vessel, wherein the lower structures of the reactor containment vessel are fixed to the lower surface of the upper foundation plate by bearing plates and fixing tools.

Accordingly, since the lower structures of the reactor containment vessel are fixed to the lower surface of the upper foundation plate by the bearing plates and the fixing tools, it is possible to firmly fix the lower structures to the upper foundation plate.

According to still another aspect of the present invention, there is provided the foundation structure of the reactor containment vessel, wherein the reactor containment vessel is a prestressed concrete reactor containment vessel, and ends of tendons serving as the lower structures are fixed to the lower surface of the upper foundation plate through the upper foundation plate.

Accordingly, since the reactor containment vessel is made of a prestressed concrete reactor containment vessel and the ends of the tendons are fixed to the lower surface of the upper foundation plate, it is possible to improve the strength of the reactor containment vessel and thin the upper foundation plate.

According to still another aspect of the present invention, there is provided the foundation structure of the reactor containment vessel, wherein the reactor containment vessel is a steel plate concrete containment vessel, and anchors serving as the lower structures are fixed to the lower surface of the upper foundation plate through the upper foundation plate.

Accordingly, since the reactor containment vessel is made of a steel plate concrete containment vessel and the anchors are fixed to the lower surface of the upper foundation plate, it is possible to easily thin the upper foundation plate.

According to still another aspect of the present invention, there is provided the foundation structure of the reactor containment vessel, wherein the reactor containment vessel is made of a reinforced concrete reactor containment vessel, and ends of reinforcing bars serving as the lower structures are fixed to the lower surface of the upper foundation plate through the upper foundation plate.

Accordingly, since the reactor containment vessel is made of a reinforced concrete reactor containment vessel and the ends of the reinforcing bars are fixed to the lower surface of the upper foundation plate, it is possible to easily thin the upper foundation plate.

### Advantageous Effects of Invention

According to the foundation structure of the reactor containment vessel of the present invention, since a base isolation device is inserted between an upper foundation plate and a lower foundation plate and the lower structures of the reactor containment vessel are fixed to the lower surface of the upper foundation plate through the upper foundation plate, space is not required inside the upper foundation plate to fix the lower structures of the reactor containment vessel and the thinning of the upper foundation plate and the simplification of a structure are allowed. In addition, with a reduction in construction period and material amount, it is possible to reduce a construction cost.

### Brief Description of Drawings

FIG. 1 is a schematic configuration diagram illustrating a nuclear power plant to which the foundation structure of a reactor containment vessel according to a first embodiment of the present invention is applied.
FIG. 2 is a schematic configuration diagram illustrating the foundation structure of the reactor containment vessel of the first embodiment.
FIG. 3 is a schematic diagram illustrating the wall structure of the prestressed concrete reactor containment vessel of the first embodiment.
FIG. 4 is a cross-sectional diagram illustrating a tendon fixing portion in the foundation structure of the reactor containment vessel of the first embodiment.
FIG. 5 is a cross-sectional diagram illustrating anchor fixing portions in the foundation structure of a reactor containment vessel according to a second embodiment of the present invention.
FIG. 6 is a cross-sectional diagram illustrating reinforcing-bar fixing portions in the foundation structure of a reactor containment vessel according to a third embodiment of the present invention.

### Description of Embodiments

Hereinafter, with reference to the accompanying drawings, a description will be given in detail of a preferred embodiment of the foundation structure of a reactor containment vessel according to the present invention. Note that the present invention is not limited to the embodiment but includes, if there is a plurality of embodiments, a combination of the embodiments.

### First Embodiment

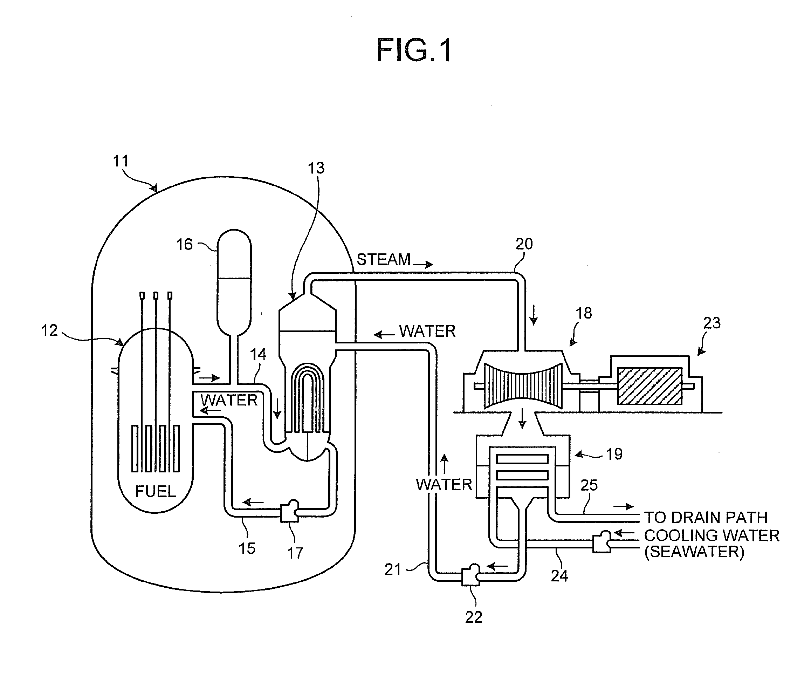

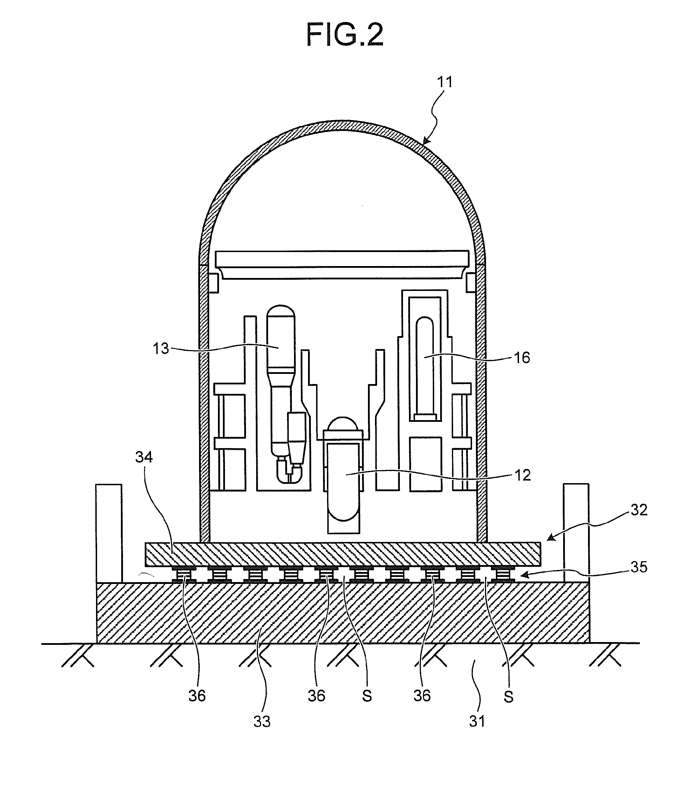

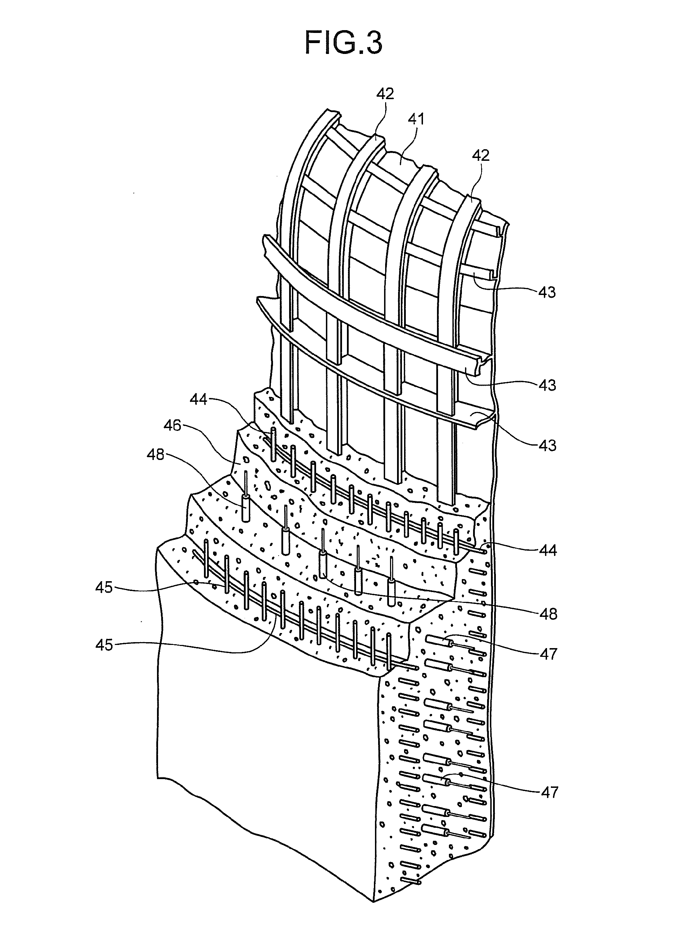

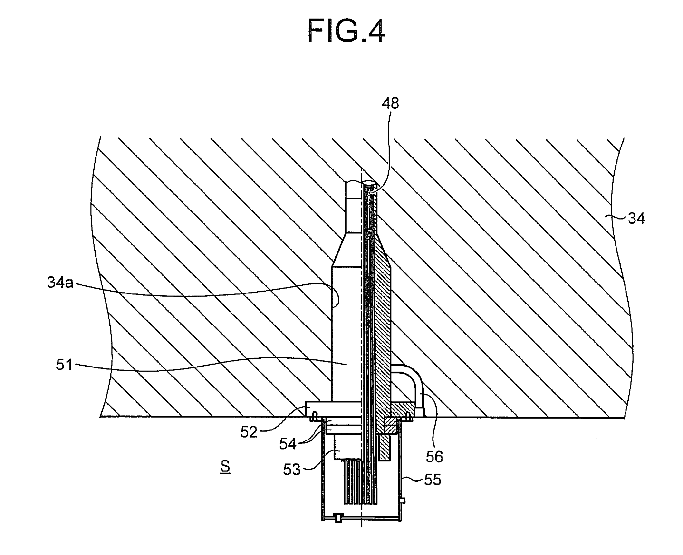

FIG. 1 is a schematic configuration diagram illustrating a nuclear power plant to which the foundation structure of a reactor containment vessel according to a first embodiment of the present invention is applied. FIG. 2 is a schematic configuration diagram illustrating the foundation structure of the reactor containment vessel of the first embodiment. FIG. 3 is a schematic diagram illustrating the wall structure of the prestressed concrete reactor containment vessel of the first embodiment. FIG. 4 is a cross-sectional diagram illustrating a tendon fixing portion in the foundation structure of the reactor containment vessel of the first embodiment.

A reactor applied to the nuclear power plant of the first embodiment is made of a pressurized water reactor (PWR: Pressurized Water Reactor) that uses light water as a reactor coolant and a neutron moderator to produce high-temperature and high-pressure water that does not come to a boil over an entire primary system, supplies the high-temperature and high-pressure water to a steam generator to generate steam through heat exchange, and supplies the steam to a turbine generator to generate electricity.

That is, in the nuclear power plant having the pressurized water reactor, a reactor containment vessel 11 stores a pressurized water reactor 12 and a steam generator 13 as illustrated in FIG. 1. The pressurized water reactor 12 and the steam generator 13 are connected to each other via cooling water pipes 14 and 15. The cooling water pipe 14 is provided with a pressurizer 16, and the cooling water pipe 15 is provided with a cooling water pump 17. In this case, light water is used as a moderator and primary cooling water, and a primary cooling system is controlled by the pressurizer 16 to be kept at a high temperature of about 160 atmospheres to prevent the primary cooling water from coming to a boil in a reactor core portion. Accordingly, the light water serving as the primary cooling water is heated by low-enriched uranium or MOX serving as fuel in the pressurized water reactor 12, and the high-temperature primary cooling water is supplied to the steam generator 13 via the cooling water pipe 14 in a state of being kept at high pressure by the pressurizer 16. The high-pressure and high-temperature primary cooling water is heat-exchanged with secondary cooling water in the steam generator 13, and the cooled primary cooling water is returned to the pressurized water reactor 12 via the cooling water pipe 15.

The steam generator 13 is connected to a turbine 18 and a condenser 19 provided outside the reactor containment vessel 11 via cooling water pipes 20 and 21, and the cooling water pipe 21 is provided with a feed pump 22. In addition, the turbine 18 is connected to a generator 23, and the condenser 19 is connected to an intake pipe 24 and a drain pipe 25 to supply and drain cooling water (for example, seawater). Accordingly, the steam generated by the heat-exchange with the high-pressure and high-temperature primary cooling water in the steam generator 13 is supplied to the turbine 18 via the cooling water pipe 20, and the turbine 18 is driven by the steam to cause the generator 23 to generate electricity. The steam having driven the turbine 18 is cooled by the condenser 19 and then returned to the steam generator 13 via the cooling water pipe 21.

As illustrated in FIG. 2, the reactor containment vessel 11 of the nuclear power plant thus configured is vertically arranged on a foundation plate 32 laid on a hard ground 31 such as a rock. Further, the reactor containment vessel 11 stores the pressurized water reactor 12, the steam generator 13, the pressurizer 16, and the like described above.

The reactor containment vessel 11 is made of a reinforced concrete reactor containment vessel (PCCV: Prestressed Concrete Containment Vessel) using prestressed steel wires (called tendons). That is, as illustrated in FIG. 3, the reactor containment vessel 11 is composed of, from the inside thereof, a liner plate 41, vertical stiffeners 42, horizontal stiffeners 43, reinforcing bars 44 and 45, concrete 46, hoop tendons 47, reverse U-shaped tendons 48, and the like. That is, in the reactor containment vessel 11, the hoop tendons 47 and the reverse U-shaped tendons 48 constitute a tendon mechanism that regularly applies a compressive force against inside pressure.

In this case, the hoop tendons 47 are circumferentially wound inside the wall body of the reactor containment vessel 11, and the reverse U-shaped tendons 48 are axially wound inside the wall body of the reactor containment vessel 11. The respective hoop tendons 47 are constituted of a bundle of PC steel wires or PC steels and inserted in sheath pipes circumferentially embedded in the wall body of the reactor containment vessel 11 in advance. Further, one or a plurality of buttress portions is circumferentially formed in the reactor containment vessel 11, and the ends of the respective hoop tendons 47 are fixed to the buttress portions.

The respective reverse U-shaped tendons 48 are constituted of a bundle of PC steel wires or PC steels likewise the respective hoop tendons 47 and inserted in sheath pipes axially embedded in the wall body of the reactor containment vessel 11 in advance. The respective reverse U-shaped tendons 48 are disposed to reticulately cross as viewed from above the reactor containment vessel 11. Further, the ends of the respective reverse U-shaped tendons 48 are fixed to the foundation plate 32.

Accordingly, the hoop tendons 47 and the reverse U-shaped tendons 48 are capable of vertically and horizontally shrinking the wall body of the reactor containment vessel 11. Thus, even when starting to expand with an increase in pressure inside the reactor containment vessel 11, the reactor containment vessel 11 may resist the expansion and withstand fluctuations in the inside pressure.

In addition, as illustrated in FIG. 2, the foundation plate 32 is composed of a lower foundation plate 33 having a retaining wall on the circumference thereof and disposed on the ground 31, an upper foundation plate 34 disposed with a prescribed interval on the upper side in the vertical direction of the lower foundation plate 33, and a base isolation device 35 inserted between the lower foundation plate 33 and the upper foundation plate 34.

The lower foundation plate 33 has, for example, a reinforced concrete structure (RC structure) incorporating reinforcing bars, is laid on the flatly-developed ground 31, and is formed in a square or rectangular shape to have a flat front (upper) surface. The upper foundation plate 34 has, for example, a reinforced concrete structure (RC structure) incorporating reinforcing bars likewise the lower foundation plate 33 and is formed in a square or rectangular shape to have flat front (upper) and rear (lower) surfaces.

The base isolation device 35 is provided between the upper surface of the lower foundation plate 33 and the lower surface of the upper foundation plate 34. For example, the base isolation device 35 is configured in such a way that a plurality of base isolation members 36 having a multi-layer base isolation structure in which disc-shaped rubber members and disc-shaped steel plates are alternately laminated together is horizontally arranged with a prescribed interval (preferably with an even interval). Further, the lower side of the respective base isolation members 36 is fixed to the upper surface of the lower foundation plate 33, and the upper side thereof is fixed to the lower surface of the upper foundation plate 34.

Further, in the foundation structure of the reactor containment vessel of the first embodiment, the lower structures of the reactor containment vessel 11 are fixed to the lower surface of the upper foundation plate 34 through the upper foundation plate 34. That is, in the base isolation device 35 provided between the lower foundation plate 33 and the upper foundation plate 34, the plurality of base isolation members 36 is arranged with a prescribed interval, and thus space is secured between the respective base isolation members 36. Therefore, the space provided between the respective base isolation members 36 is used as operation space to fix the lower structures of the reactor containment vessel 11 to the upper foundation plate 34. Specifically, the lower structures of the reactor containment vessel 11 are extended through the upper foundation plate 34 to the space (operation space) between the respective base isolation members 36 to be fixed to the lower surface of the upper foundation plate 34.

Specifically, as illustrated in FIG. 4, the foundation plate 32 is configured in such a way that the plurality of base isolation members 36 serving as the base isolation device 35 is arranged with a prescribed interval between the lower foundation plate 33 and the upper foundation plate 34, and the space (operation space) S is secured between the respective base isolation members 36. Since the reactor containment vessel 11 is made of a concrete reactor containment vessel as described above, the reverse U-shaped tendons 48 are applied as the lower structures. The reverse U-shaped tendons 48 are constituted of a bundle of PC steel wires or PC steels and inserted in sheath pipes 51 embedded in a wall body 11a of the reactor containment vessel 11.

In the upper foundation plate 34, through-holes 34a are formed at prescribed positions along a vertical method. The ends of the reverse U-shaped tendons 48 and the sheath pipes 51 are inserted in the through-holes 34a and extended to the space (operation space) S. In addition, bearing plates 52 are fixed to the lower surface of the upper foundation plate 34 at the circumferences of the through-holes 34a, anchor heads 53 serving as fixing tools are fixed to the ends of the reverse U-shaped tendons 48, and shim plates 54 are inserted between the bearing plates 52 and the anchor heads 53. Further, end caps 55 are fixed to the bearing plates 52 to cover the ends of the reverse U-shaped tendons 48, the anchor heads 53, and the shim plates 54, which secures fire protection and fire resistance in the space S of the base isolation device 35.

In this case, an operator pulls downward the anchor head 53 fixed to the end of the reverse U-shaped tendon 48 using a jack not illustrated from the space S to apply pressure to the reverse U-shaped tendon 48 in the axial direction of the reactor containment vessel 11. Then, a prescribed number of the shim plates 54 are inserted and fixed between the bearing plate 52 and the anchor head 53 in a state in which the reverse U-shaped tendon 48 is pulled with the prescribed pressure. Afterwards, a rust inhibitor is filled in the reverse U-shaped tendon 48 through a filling pipe 56 inside the space S. Note that in the fixing operation, the fixing structure is applied to all the reverse U-shaped tendons 48 of the reactor containment vessel 11.

Note that in the first embodiment, the through-holes 34a and the sheath pipes 51 of the upper foundation plate 34 are shaped to be thickened with taper portions in the middle of the ends, and the sheath pipes 51 are fixed wedgewise. However, without being limited to the shape, the through-holes 34a and the sheath pipes 51 of the upper foundation plate 34 may have the same diameter along the longitudinal direction.

As described above, in the foundation structure of the reactor containment vessel of the first embodiment, the lower foundation plate 33 provided on the ground 31, the upper foundation plate 34 provided over the lower foundation plate 33, the base isolation device 35 inserted between the upper foundation plate 34 and the lower foundation plate 33, and the reactor containment vessel 11 provided on the upper foundation plate 34 are provided, and the lower structures of the reactor containment vessel 11 are fixed to the lower surface of the upper foundation plate 34 through the upper foundation plate 34.

Accordingly, since the base isolation device 35 is inserted between the upper foundation plate 34 and the lower foundation plate 33 and the lower structures of the reactor containment vessel 11 are fixed to the lower surface of the upper foundation plate 34 through the upper foundation plate 34, the space S is not required inside the upper foundation plate 34 to fix the lower structures of the reactor containment vessel 11 and the thinning of the upper foundation plate 34 and the simplification of a structure are allowed. In addition, with a reduction in construction period and material amount, it is possible to reduce a construction cost.

In addition, in the foundation structure of the reactor containment vessel of the first embodiment, the plurality of base isolation members 36 is horizontally arranged with a prescribed interval between the upper foundation plate 34 and the lower foundation plate 33 as the base isolation device 35, and the lower structures of the reactor containment vessels 11 are extended through the upper foundation plate 34 to the space S between the respective base isolation members 36 to be fixed. Accordingly, since the lower structures of the reactor containment vessel 11 are extended to the space S between the respective base isolation members 36 to be fixed, it is possible for an operator to perform a fixing operation inside the space S. In addition, the space S is not required inside the upper foundation plate 34 to fix the lower structures of the reactor containment vessel 11, and the thinning of the upper foundation plate 34 is allowed.

Moreover, in the foundation structure of the reactor containment vessel of the first embodiment, the reactor containment vessel 11 is made of a concrete reactor containment vessel, and the ends of the reverse U-shaped tendons 48 serving as the lower structures are fixed to the lower surface of the upper foundation plate 34 through the upper foundation plate 34. In this case, the ends of the reverse U-shaped tendons 48 are fixed by the bearing plates 52 and the anchor heads 53. Since the reactor containment vessel 11 is made of a concrete reactor containment vessel and the reverse U-shaped tendons 48 are used, it is possible to improve the strength of the reactor containment vessel 11 and firmly fix the reverse U-shaped tendons 48 by the bearing plates 52 and the anchor heads 53.

### Second Embodiment

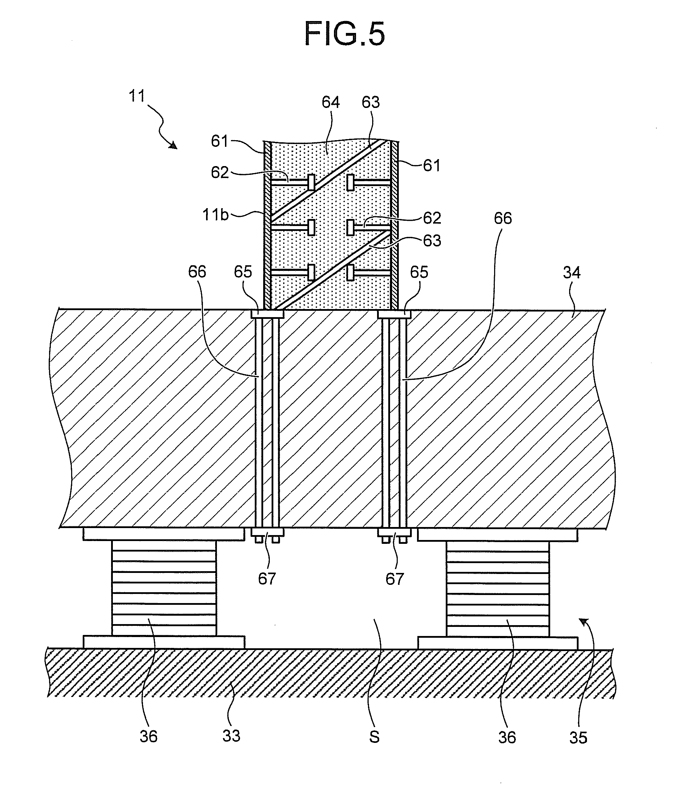

FIG. 5 is a cross-sectional diagram illustrating anchor fixing portions in the foundation structure of a reactor containment vessel according to a second embodiment of the present invention. Note that members having the same functions as those of the embodiment described above will be denoted by the same reference signs and their detailed descriptions will be omitted.

A reactor containment vessel 11 of the second embodiment is made of a steel plate concrete containment vessel (SCCV: Steal Concrete Containment Vessel). That is, as illustrated in FIG. 5, in the reactor containment vessel 11, a wall body 11b is composed of steel plates 61, studs 62, tie bars 63, concrete 64, and the like, and base plates 65 fixed at a lower portion are fixed to a foundation plate 32 by anchors 66.

Further, the foundation plate 32 is composed of a lower foundation plate 33 disposed on a ground 31, an upper foundation plate 34 disposed with a prescribed interval on the upper side in the vertical direction of the lower foundation plate 33, and a base isolation device 35 inserted between the lower foundation plate 33 and the upper foundation plate 34, and configured in such a way that a plurality of base isolation members 36 is horizontally arranged with a prescribed interval.

That is, the foundation plate 32 is configured in such a way that the plurality of base isolation members 36 serving as the base isolation device 35 is arranged with a prescribed interval between the lower foundation plate 33 and the upper foundation plate 34, and space (operation space) S is secured between the respective base isolation members 36. Since the reactor containment vessel 11 is made of a steel plate concrete containment vessel, the anchors 66 are applied as lower structures. The upper ends of the anchors 66 are fixed to the base plates 65, and the lower ends thereof are extended through the upper foundation plate 34 to the space (operation space) S. In addition, the bearing plate 67 are fixed to the lower surface of the upper foundation plate 34, and the lower ends of the anchors 66 are fixed to the bearing plates 67 by welding as a fixing means.

In this case, an operator performs an operation to weld the lower ends of the anchors 66 and the bearing plate 67 together inside the space S. Note that the welding operation is performed at a plurality of places of the lower end of the reactor containment vessel 11 with a prescribed interval in the circumferential direction.

As described above, in the foundation structure of the reactor containment vessel of the second embodiment, the lower foundation plate 33 provided on the ground 31, the upper foundation plate 34 provided over the lower foundation plate 33, the base isolation device 35 inserted between the upper foundation plate 34 and the lower foundation plate 33, and the reactor containment vessel 11 provided on the upper foundation plate 34 are provided, the reactor containment vessel 11 is made of a steel plate concrete containment vessel, and the anchors 66 serving as the lower structures are extended through the upper foundation plate 34 to the space (operation space) S to be fixed to the bearing plates 67.

Accordingly, since the base isolation device 35 is inserted between the upper foundation plate 34 and the lower foundation plate 33 and the anchors 66 of the reactor containment vessel 11 are fixed to the lower surface of the upper foundation plate 34 through the upper foundation plate 34, the space S is not required inside the upper foundation plate 34 to fix the lower structures of the reactor containment vessel 11 and the thinning of the upper foundation plate 34 and the simplification of a structure are allowed. In addition, with a reduction in construction period and material amount, it is possible to reduce a construction cost.

### Third Embodiment

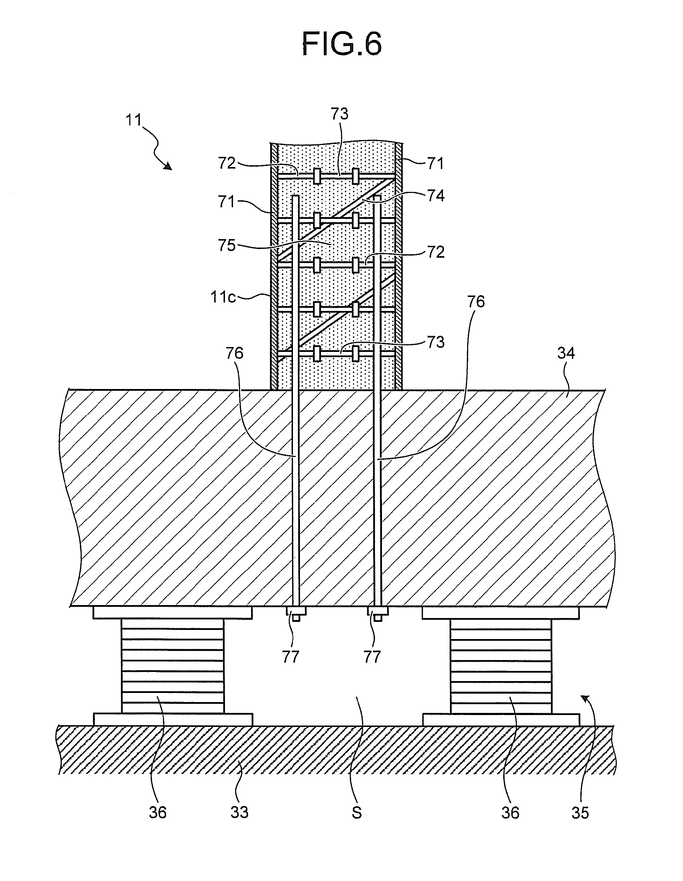

FIG. 6 is a cross-sectional diagram illustrating reinforcing-bar fixing portions in the foundation structure of a reactor containment vessel according to a third embodiment of the present invention. Note that members having the same functions as those of the embodiments described above will be denoted by the same reference signs and their detailed descriptions will be omitted.

A reactor containment vessel 11 of the third embodiment is made of a reinforced concrete reactor containment vessel (RCCV: Reinforced Concrete Containment Vessel). That is, as illustrated in FIG. 6, in the reactor containment vessel 11, a wall body 11c is composed of steel plates 71, studs 72, connection members 73, tie bars 74, concrete 75, and the like, and the lower ends of reinforcing bars 76 having the upper ends thereof embedded in the concrete 75 are fixed to a foundation plate 32.

Further, the foundation plate 32 is composed of a lower foundation plate 33 disposed on a ground 31, an upper foundation plate 34 disposed with a prescribed interval on the upper side in the vertical direction of the lower foundation plate 33, and a base isolation device 35 inserted between the lower foundation plate 33 and the upper foundation plate 34, and configured in such a way that a plurality of base isolation members 36 is horizontally arranged with a prescribed interval.

That is, the foundation plate 32 is configured in such a way that the plurality of base isolation members 36 serving as the base isolation device 35 is arranged with a prescribed interval between the lower foundation plate 33 and the upper foundation plate 34, and space (operation space) S is secured between the respective base isolation members 36. Since the reactor containment vessel 11 is made of a reinforced concrete reactor containment vessel, the reinforcing bars 76 are applied as lower structures. The upper ends of the reinforcing bars 76 are fixed to the concrete 75 in their embedded state, and the lower ends thereof are extended through the upper foundation plate 34 to the space (operation space) S. In addition, bearing plate 77 are fixed to the lower surface of the upper foundation plate 34, and the lower ends of the reinforcing bars 76 are fixed to the bearing plates 77 by welding as a fixing means.

In this case, an operator performs an operation to weld the lower ends of the reinforcing bars 76 and the bearing plate 77 together inside the space S. Note that the welding operation is performed at a plurality of places of the lower end of the reactor containment vessel 11 with a prescribed interval in the circumferential direction.

As described above, in the foundation structure of the reactor containment vessel of the third embodiment, the lower foundation plate 33 provided on the ground 31, the upper foundation plate 34 provided over the lower foundation plate 33, the base isolation device 35 inserted between the upper foundation plate 34 and the lower foundation plate 33, and the reactor containment vessel 11 provided on the upper foundation plate 34 are provided, the reactor containment vessel 11 is made of a reinforced concrete reactor containment vessel, and the reinforcing bars 76 serving as the lower structures are extended through the upper foundation plate 34 to the space (operation space) S to be fixed to the bearing plates 77.

Accordingly, since the base isolation device 35 is inserted between the upper foundation plate 34 and the lower foundation plate 33 and the reinforcing bars 76 of the reactor containment vessel 11 are fixed to the lower surface of the upper foundation plate 34 through the upper foundation plate 34, the space S is not required inside the upper foundation plate 34 to fix the lower structures of the reactor containment vessel 11 and the thinning of the upper foundation plate 34 and the simplification of a structure are allowed. In addition, with a reduction in construction period and material amount, it is possible to reduce a construction cost.

Note that in each of the embodiments described above, the foundation structure of the reactor containment vessel of the present invention is applied to a pressurized water reactor but may also be applied to a boiling water reactor (BWR: Boiling Water Reactor) and may be applied to any reactor so long as it is a light-water reactor.

### Reference Signs List

- 11: reactor containment vessel
- 12: pressurized water reactor
- 13: steam generator
- 31: ground
- 32: foundation plate
- 33: lower foundation plate
- 34: upper foundation plate
- 35: base isolation device
- 36: base isolation member
- 47: hoop tendon
- 48: reverse U-shaped tendon (lower structure)
- 51: sheath pipe
- 52, 67, 77: bearing plate
- 53: anchor head (fixing tool)
- 54: shim plate
- 66: anchor (lower structure)
- 76: reinforcing bar (lower structure)

## Claims

1. A foundation structure of a reactor containment vessel, comprising:
a lower foundation plate provided on a ground;
an upper foundation plate provided over the lower foundation plate;
a base isolation device inserted between the upper foundation plate and the lower foundation plate; and
a reactor containment vessel provided on the upper foundation plate, wherein
lower structures of the reactor containment vessel are fixed to a lower surface of the upper foundation plate through the upper foundation plate.

2. The foundation structure of the reactor containment vessel according to claim 1, wherein
the base isolation device is configured in such a way that a plurality of base isolation members is horizontally arranged with a prescribed interval between the upper foundation plate and the lower foundation plate, and
the lower structures of the reactor containment vessel are extended through the upper foundation plate to space between the respective base isolation members to be fixed.

3. The foundation structure of the reactor containment vessel according to claim 1 or 2, wherein
the lower structures of the reactor containment vessel are fixed to the lower surface of the upper foundation plate by bearing plates and fixing tools.

4. The foundation structure of the reactor containment vessel according to any one of claims 1 to 3, wherein
the reactor containment vessel is a prestressed concrete reactor containment vessel, and
ends of tendons serving as the lower structures are fixed to the lower surface of the upper foundation plate through the upper foundation plate.

5. The foundation structure of the reactor containment vessel according to any one of claims 1 to 3, wherein
the reactor containment vessel is a steel plate concrete containment vessel, and
anchors serving as the lower structures are fixed to the lower surface of the upper foundation plate through the upper foundation plate.

6. The foundation structure of the reactor containment vessel according to any one of claims 1 to 3, wherein
the reactor containment vessel is a reinforced concrete reactor containment vessel, and
ends of reinforcing bars serving as the lower structures are fixed to the lower surface of the upper foundation plate through the upper foundation plate.
